# EUROPEAN PATENT APPLICATION

(11) **EP 1 990 803 A1**
(43) Date of publication of application: **12.11.2008**
(21) Application number: 08151425.9
(22) Date of filing: 14.02.2008
(51) Int. Cl.: G11B 27/00

(54) **Method of high speed video playback and video playback apparatus using the same**

(30) Priority: 07.05.2007 KR 20070043972
(71) Applicant: Samsung Electronics Co., Ltd., Suwon-si, Gyeonggi-Do (KR)
(72) Inventor: Chun, Hong-gi, Gyeonggi-do (KR)
(74) Representative: Grünecker, Kinkeldey, Stockmair & Schwanhäusser Anwaltssozietät

(57) **Abstract**

A method of high speed video playback and a video apparatus using the same sets skip durations of a number of video frames to skip and frame playback durations of a number of video frames to play back, such that different frames of the same video are displayed in each invocation of high speed playback. Accordingly, a user can see the entire duration work of the video within a short time in the high speed playback mode. As a result, user convenience is improved.

## Description

### BACKGROUND OF THE INVENTION

### 1. Field of the Invention

The present general inventive concept relates to a method of high speed video playback and an apparatus using the same, and more particularly, to a method of high speed video playback to display different scenes when playing a recorded video and an apparatus using the same.

### 2. Description of the Related Art

A video playback apparatus retrieves encoded video data from a recording medium, and decodes and plays back the retrieved video data. A camcorder and a video recorder are typical examples of a video playback apparatus.

A video playback apparatus provides a high speed playback function to play back a video at a high rate. A user can select a high speed playback function to see the entire framework of a video within a short time, such as when the video has a long running time.

However, a conventional video playback apparatus plays back the same frames regardless of whether a video is played at a fast rate or at a slow rate. That is, although playback speed differs, the same frames are played back.

Accordingly, a method of playing back different frames of a video is required, especially when the video is played at a high speed.

### SUMMARY OF THE INVENTION

The present general inventive concept provides a method of high speed video playback, which plays back a video through different scenes in a high speed playback mode, and a video playback apparatus using the same.

Additional aspects and utilities of the present general inventive concept will be set forth in part in the description which follows and, in part, will be obvious from the description, or may be learned by practice of the general inventive concept.

The foregoing and/or other aspects and utilities of the present general inventive concept may be achieved by providing a method of a high speed video playback including setting either skip duration or playback duration, and playing back a video by repeatedly skipping a number of frames corresponding to the skip duration and subsequently playing back a number of frames corresponding to the playback duration.

The setting of the skip duration or the playback duration may include setting either the skip duration or the playback duration with a random value.

The playing back may include skipping the video from a playback starting point of the video until the skip duration lapses, playing back the video at a high speed by repeating playing back the video within the playback duration, and setting either the skip duration or the playback duration to be used in a next high speed playback.

The setting may set either the skip duration or the playback duration considering the total number of scenes to be played back and the length of each scene.

The foregoing and/or other aspects and utilities of the present general inventive concept may be achieved by providing a video playback apparatus including a signal process unit to playback a video by repeating frame skips and frame playbacks, and a controller to control the signal process unit to set either skip duration or playback duration and to playback the video by repeating frame skips and frame playbacks according to the set skip duration and playback duration, respectively.

The controller may set either the skip duration or the playback duration using a random value generator.

The controller may control the signal process unit to skip the video from a playback starting point of the video until the skip duration lapses, and to playback the video at a high speed by repeating operation of the video playback within the playback duration, and may set either the skip duration or the playback duration to a different value when the video is replayed at a high speed.

The controller may set either the skip duration or the playback duration considering the total number of scenes to be played back and the length of each scene.

The foregoing and/or other aspects and utilities of the present general inventive concept may also be achieved by providing a method of playing back at high speed a video comprising a sequence of frames, the method including setting a skip value variable allocated in a memory to a first number of the frames to skip in a high speed playback mode, setting a playback value variable allocated in the memory to a second number of the frames to play back in the high speed playback mode independently of the first number of frames skipped, and alternating skipping the first number of frames and playing back the second number of frames upon invocation of the high speed playback mode.

The foregoing and/or other aspects and utilities of the present general inventive concept may also be achieved by providing a video playback apparatus including a video source to provide a sequence of video frames, a signal process unit to skip a first number of the video frames and to subsequently playback a second number of the video frames in a high speed playback mode, a controller to provide the first number of the video frames and the second number of the video frames to the signal process unit, and a display to display the second number of video frames.

### BRIEF DESCRIPTION OF THE DRAWINGS

These and/or other aspects and utilities of the present general inventive concept will become apparent and more readily appreciated from the following description of the embodiments, taken in conjunction with the accompanying drawings of which:

FIG. 1 is a block diagram illustrating a video playback apparatus according to an exemplary embodiment of the present general inventive concept;

FIG. 2 is a view illustrating a playback operation of high speed video using a video playback apparatus according to an exemplary embodiment of the present general inventive concept; and

FIG. 3 is a flowchart illustrating a method of playing back a high speed video using a video playback apparatus according to an exemplary embodiment of the present general inventive concept;

### DETAILED DESCRIPTION OF THE PREFERRED EMBODIMENTS

Reference will now be made in detail to the embodiments of the present general inventive concept, examples of which are illustrated in the accompanying drawings, wherein like reference numerals refer to the like elements throughout. The embodiments are described below in order to explain the present general inventive concept by referring to the figures.

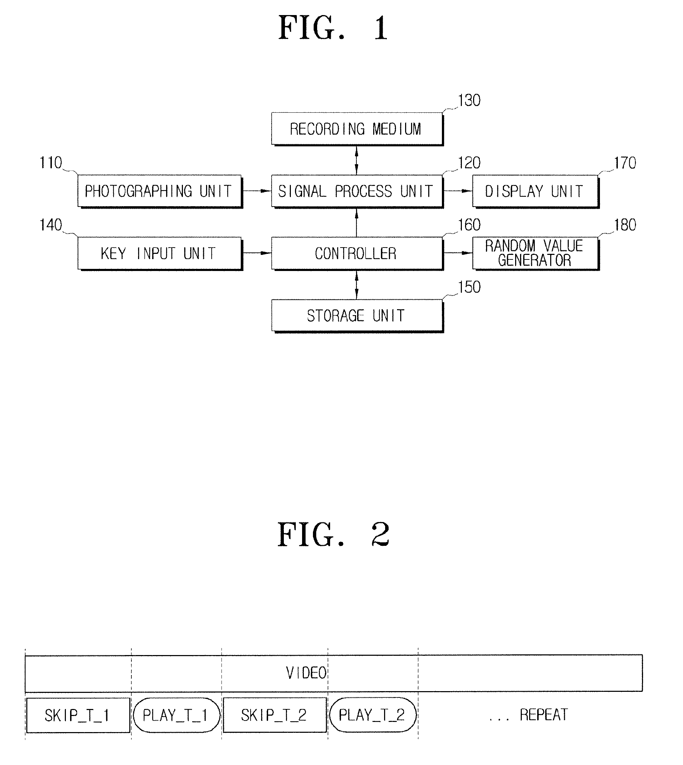

FIG. 1 is a block diagram illustrating a video playback apparatus according to an exemplary embodiment of the present general inventive concept.

The video playback apparatus may be a camcorder, which displays different scenes of the video in high speed playback by setting skip durations and playback durations independently.

Referring to FIG. 1, the video playback apparatus may comprise a photographing unit 110, a signal process unit 120, a recording medium 130, a key input unit 140, a storage unit 150, a controller 160, a display unit 170, and a random value generator 180.

The photographing unit 110 may comprise an image sensor to convert an optical image formed on a photosensitive surface of the sensor into an electric signal, and to output the electric signal corresponding to the optical image information in the form of a one dimensional electric signal that reproduces the image through a horizontal and vertical scan. The photographing unit 110 may remove noise, and may adjust the gain of the converted signal. The photographing unit 110 may convert the adjusted signal into a digital signal, and may output the digital signal.

The signal process unit 120 processes the digital signal transmitted from the photographing unit 110. The signal process unit 120 may compress the processed digital signal into a Joint Photographing Experts Group (JPEG) format or a Moving Picture Experts Group (MPEG) format, and may store the compressed signal on the recording medium 130.

The signal process unit 120 may decompress the compressed video stored in the recording medium 130, and provides the decompressed video to the display unit 170, to be described further below, by repeating frame skips and frame playbacks according to predetermined values of skip durations and playback durations. As used herein, a frame is a single image in a sequence of images forming the video. A scene, as used herein, is a sequence of frames in the video defined by an initial frame and a terminal frame. A video may contain numerous scenes, each containing a set of the video frames.

The key input unit 140 may comprise a key to select a high speed playback mode. Variables to respectively contain a value of skip duration and a value of playback duration may be allocated in the storage unit 150. The skip duration may be a number of frames in the video that are to be skipped in the high speed mode, and the playback duration may be a number of frames in the video that are to be played back in the high speed mode subsequent to the lapsing of the skip duration.

If the high speed playback mode is invoked through the key input unit 140, the controller 160 may set a value of skip duration and a value of playback duration by storing a random value generated by the random value generator 180 at the respective variable locations in the storage unit 150.

The controller 160 may control the signal process unit 120 to repeat the frame skips and the frame playbacks according to the set values of skip duration and playback duration.

A video sequence is displayed on the display unit 170 as the video frames over the playback duration and skipped frames over the skip duration, as is described with reference to FIG. 2.

The exemplary system illustrated in FIG. 1 may be implemented in hardware, software, or a combination of both. For example, certain components, such as the signal process unit 120, and the random value generator 180, may be suited to be realized as processor instructions executing in one or more computer execution threads on one or more processors. Each of those functional components may be implemented on a dedicated processor, or may be executed on a single processor, such as a processor that implements the controller 160. Alternatively, each component illustrated in FIG. 1 may be realized in one or more application specific circuits. The present general inventive concept may be embodied through numerous configurations other than that illustrated in FIG. 1 without deviating from the spirit and intended scope thereof.

FIG. 2 is a view illustrating operation of playing back a video at a high speed using a video playback apparatus according to an exemplary embodiment of the present general inventive concept.

Referring to FIG. 2, skip durations and playback durations set to a video are illustrated. First and second skip durations SKIP_T_1, SKIP_T_2, respectively, and first and second playback durations PLAY_T_1, PLAY_T_2, respectively, may be assigned values, such as an integral number of video frames, generated by a random value generator 180.

The signal process unit 120 skips the frames of video from a playback starting point of the video stored in the recording medium 130 until the first skip duration SKIP_T_1 lapses, and plays back the video from an ending point of the first skip duration SKIP_T_1 until the first playback duration PLAY_T_1 lapses. That is, an ending point of skip duration corresponds to a starting point of playback duration.

The signal process unit 120 skips the frames of video from an ending point of the first playback duration PLAY_T_1 until the second skip duration SKIP_T_2 lapses, and plays back the video from an ending point of the second skip duration SKIP_T_2 until the second playback duration PLAY_T_2 lapses. That is, an ending point of playback duration corresponds to a starting point of skip duration. The signal process unit 120 plays back the video at a high speed by repeating frame skips and frame playbacks.

Skip duration values of the first and second skip durations SKIP_T_1, SKIP_T_2 may be set to the same value, and playback duration values of the first and second playback durations PLAY_T_1, PLAY_T_2 may be set to the same value. The skip duration values and the playback duration values from a prior high speed playback may be assigned new and different values to be used in the next high speed playback, such that different frames of a scene are played each time the high speed playback is invoked on the video. That is, when a first set of scenes is played back in a first invocation of the high speed playback mode, a first set of frames is played back, and upon a second invocation of the high speed playback mode on the same set of scenes, a second set of the frames is played back.

Alternatively, skip duration values of the respective first and second skip durations SKIP_T_1, SKIP-T-2 may be set to different values, and playback duration values of the respective first and second playback durations PLAY_T_1, PLAY_T_2 may be set to different values. That is, different skip duration values and playback duration values may be set each time the high speed playback is invoked. Accordingly, skip duration values and playback duration values that are different from the prior high speed playback may be used in the next high speed playback, such that different frames are played in each high speed playback invoked.

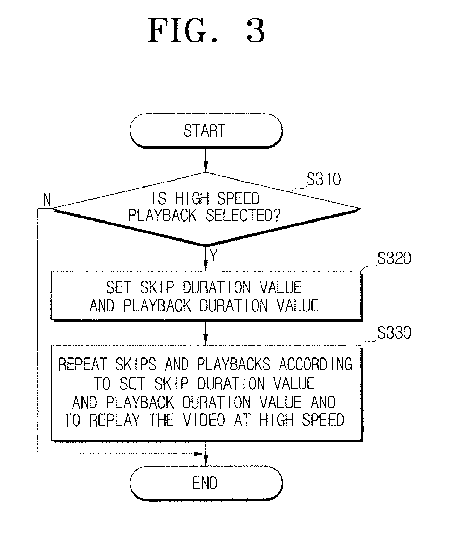

FIG. 3 is a flowchart illustrating a method of playing back a video at high speed using a video playback apparatus according to an exemplary embodiment of the present general inventive concept.

Referring to FIG. 3, in operation S310, the controller 160 determines whether a high speed playback mode is selected. If a signal indicating a high speed playback mode is input, the controller 160 determines that the high speed playback is selected.

If it is determined that the high speed playback mode is selected, in operation S320, the controller 160 sets a skip duration value and a playback duration value according to a random value generated by the random value generator 180 and stores the values in respective variables in the storage unit 150. The controller 160 may set the skip duration value and the playback duration value considering the total number of videos stored in the recording medium 130, and the length of each video selected to be played back at high speed. For example, the controller 160 may set a large skip duration value and playback duration value if the total number and the length of the selected videos exceed reference values, and set a small skip duration value and playback duration value if the total number and the length of the selected videos are less than the reference values.

In operation S330, the controller 160 controls the signal process unit 120 to repeat frame skips and frame playbacks according to the set skip duration value and playback duration value and to playback the video at a high speed.

It has been described above that a skip duration value and a playback duration value are set in the exemplary embodiment, but other playback implementations can be realized without deviating from the spirit and intended scope of the present general inventive concept. Alternately, for example, because a starting point of playback duration corresponds to an ending point of skip duration, the present general inventive concept may be implemented to randomly set a skip position value according to a skip position and a playback position value according to a playback position.

In an exemplary embodiment of the present general inventive concept, both a skip duration value and a playback duration value are set, but it is merely an exemplary embodiment of the present general inventive concept. Alternatively, it may be implemented that either skip duration values or playback duration values are set. If skip duration values are set to different values, playback durations are changed accordingly.

As described above, a user can see entire framework of a video within a short time, and different scenes are played each time the high speed playback mode is invoked. Therefore, user convenience is improved.

Although a few embodiments of the present general inventive concept have been illustrated and described, it will be appreciated by those skilled in the art that changes may be made in these embodiments without departing from the principles and spirit of the general inventive concept, the scope of which is defined in the appended claims and their equivalents.

## Claims

1. A method of a high speed video playback comprising:
setting either a skip duration or a playback duration; and
playing back a video by repeatedly skipping a number of frames corresponding to the skip duration and subsequently playing back a number of frames corresponding to the playback duration.

2. The method of claim 1, wherein the setting of the skip duration or the playback duration includes setting either the skip duration or the playback duration with a random value.

3. The method of claim 1, wherein the playing back comprises skipping the video from a playback starting point of the video until the skip duration lapses, playing back the video at a high speed by repeating playing back the video within the playback duration, and setting either the skip duration or the playback duration to be used in a next high speed playback.

4. The method of claim 1, wherein the setting sets either the skip duration or the playback duration considering the total number of videos to be played back and the length of each video.

5. A video playback apparatus comprising:
a signal process unit to playback a video by repeating frame skips and frame playbacks; and
a controller to control the signal process unit to set either skip duration or playback duration and to playback the video by repeating frame skips and frame playbacks according to the set skip duration and playback duration, respectively.

6. The apparatus of claim 5, wherein the controller sets either the skip duration or the playback duration using a random value generator.

7. The apparatus of claim 5, wherein the controller controls the signal process unit to skip the video from a playback starting point of the video until the skip duration lapses, and to playback the video at a high speed by repeating operation of the video playback within the playback duration, and sets either the skip duration or the playback duration to a different value when the video is replayed at a high speed.

8. The apparatus of claim 5, wherein the controller sets either the skip duration or the playback duration considering the total number of videos to be played back and the length of each video.

9. A method of playing back at high speed a video comprising a sequence of frames, the method comprising:
setting a skip value variable allocated in a memory to a first number of the frames to skip in a high speed playback mode;
setting a playback value variable allocated in the memory to a second number of the frames to play back in the high speed playback mode independently of the first number of frames skipped; and
alternating skipping the first number of frames and playing back the second number of frames upon invocation of the high speed playback mode.

10. The method of claim 9, wherein the setting of the skip value includes setting the skip value to a randomly generated number of the first frames.

11. The method of claim 9, wherein the setting of the playback value includes setting the playback value to a randomly generated number of the second frames.

12. The method of claim 10, wherein the setting of the playback value includes setting the playback value to a randomly generated number of the second frames different from the randomly generated number of first frames of the skip value.

13. A video playback apparatus comprising:
a video source to provide a sequence of video frames; and
a signal process unit to skip a first number of the video frames and to subsequently playback a second number of the video frames in a high speed playback mode;
a controller to provide the first number of the video frames and the second number of the video frames to the signal process unit to generate the second number of video frames in the high speed video mode.

14. The apparatus of claim 13, further comprising:
a display unit to display the second number of video frames in a sequence of the video frames after skipping the first number of frames from the sequence of video frames.

15. The apparatus of claim 13, further comprising:
a random value generator to generate respective random values to be provided as the first number of video frames and the second number of video frames.

16. The apparatus of claim 15, wherein the random value generator provides respective new random numbers as the first number of video frames and the second number of video frames with each invocation of the high speed playback mode.

17. The apparatus of claim 16, wherein the random value generator provides different random numbers as the first number of video frames and the second number of video frames.

18. The apparatus of claim 13, further comprising:
a storage unit to store the first number of video frames as a skip duration value and to store the second number of video frames as a playback duration value.

19. The apparatus of claim 18, further comprising:
a random value generator to generate respective random values to be stored in the skip duration value and the playback duration value.

20. The apparatus of claim 13, further comprising:
a key input unit having a key to invoke the high speed playback mode

21. The apparatus of claim 13, wherein the video source provides compressed digital video frames.

22. The apparatus of claim 13, wherein the sequence of video frames comprises:
the first number of video frames, the second number of video frames, the first number of video frames, and the second number of video frames, in order.
